# FASCICULE DE BREVET EUROPEEN

(11) **EP 1 488 674 B1**
(45) Date de publication et mention de la délivrance du brevet: **03.08.2011**
(21) Numéro de dépôt: 04364043.2
(22) Date de dépôt: 10.06.2004
(51) Int. Cl.: A01C 7/08, A01C 15/00

(54) **Semoir à distribution pneumatique des graines**
Pneumatischer Saatgutverteiler
Pneumatic seed distributor

(30) Priorité: 16.06.2003 FR 0307209
(43) Date de publication de la demande: 22.12.2004
(73) Titulaire: SULKY-BUREL S.A.S, 35220 Chateaubourg (FR)
(72) Inventeur: Chevalier, Patrick, 35220 Chateaubourg (FR)
(74) Mandataire: Branger, Jean-Yves

(56) Documents cités:
- EP-A- 0 309 608
- EP-A- 0 376 018
- EP-A- 0 737 416
- WO-A-98/12512
- FR-A- 2 770 081

## Description

La présente invention concerne un semoir à distribution pneumatique des graines.

Plus précisément elle concerne un semoir comprenant une trémie de réception et de stockage des graines à semer, à la base de laquelle est placé un dispositif d'extraction et de dosage centralisé apte à extraire des graines hors de la trémie et à les délivrer avec un débit déterminé à la base d'une colonne de transfert tubulaire verticale, ou sensiblement verticale, au sommet de laquelle est montée une tête de répartition.

Cette dernière est connectée par un ensemble de tubulures souples à un ensemble de socs semeurs, un dispositif de soufflage à effet Venturi étant adapté pour faire remonter de bas en haut dans cette colonne tubulaire les graines délivrées par ledit dispositif d'extraction et de dosage et pour les amener à la tête de répartition afin qu'elles soient ensuite projetées dans les tubulures souples pour alimenter les socs semeurs.

Cet ensemble est porté par un châssis pourvu de roues et destiné à être attelé à un tracteur et déplacé par celui-ci durant l'opération d'ensemencement d'un sol.

En général, la tête de répartition consiste en un boîtier creux et plat, de forme discoïde (ayant un profil en forme d'assiette renversée), d'axe vertical; elle est pourvue à sa périphérie d'un certain nombre d'embouts de connexion pour le branchement des tubulures.

Ces embouts, angulairement répartis de manière régulière, sont disposés radialement par rapport à l'axe du boîtier.

Leur nombre, égal à celui des socs semeurs, est par exemple égal à trente deux.

Des dispositifs de ce genre sont bien connus.

A titre informatif on pourra à cet égard se reporter par exemple aux documents de brevet AT 279 240, EP 0 309 608, EP 0 376 018, WO 98/12 512 et FR 2 770 081.

Généralement, la trémie a la forme d'une pyramide renversée, ou-pour des capacités plus importantes - d'une paire de pyramides adjacentes renversées.

Sur ce genre de machine, il est important, pour une bonne compacité, que la colonne de transfert, ainsi que la tête de répartition qui la coiffe, soient intégrées au mieux à la trémie, ou accolées au plus près à celle-ci.

A la simple observation de la figure 2 du document AT 279 240, qui ne respecte pas cette règle, on comprend qu'il se pose un problème d'encombrement de la machine, notamment en longueur.

Il est intéressant par ailleurs que le flux d'air chargé de graines qui quitte le système à Venturi pour être transféré à la tête de répartition n'ait pas à parcourir de coude, contrairement aux agencements prévus dans le document AT précité et dans le document de brevet EP 0 376 018.

En effet, les parties tubulaires coudées sont causes de perte d'énergie et d'une mauvaise répartition, non homogène, des graines arrivant à la tête de répartition ce qui, corrélativement induit une distribution inégale des graines aux différentes tubulures alimentant les socs semeurs.

Selon une configuration optimale, qu'on trouve du reste dans les documents de brevet EP 0 309 608 et WO 98/12 512, le dispositif à Venturi où s'opère l'incorporation de graines au sein du flux d'air fourni par le ventilateur se trouve directement à la base de la colonne de transfert, sans qu'il y ait lieu de recourir à un coude intermédiaire.

L'invention propose un agencement de ce type.

L'écoulement des graines hors de la trémie se fait au travers d'une fenêtre (ouverture) ménagée dans le fond de celle-ci, et le dispositif d'extraction et de dosage centralisé assurant leur prise en charge est donc naturellement situé à la base de la trémie, au voisinage de cette fenêtre.

Egalement pour raison de compacité améliorée, il est judicieux de positionner aussi le dispositif à Venturi, et donc la base de la colonne de transfert, dans cette zone.

Dans une telle hypothèse, ladite colonne de transfert est forcément disposée à l'intérieur de la trémie, au sein de la masse de graines qui y est stockée.

Ceci n'est pas gênant en soi.

Cependant, en général, la tête de répartition qui coiffe l'extrémité haute de la colonne est également disposée à l'intérieur de la trémie, ce qui est plus gênant.

En effet, dans cette hypothèse, elle gêne l'opération de remplissage de la trémie. De plus, en cas de bourrage du produit, l'accès à ladite tête est délicat, voire impossible, car celle-ci est noyée dans la masse de produit.

Pour retirer le couvercle dont est munie la tête de répartition, il est nécessaire de vider partiellement la trémie en enlevant un grand volume de graines occupant la partie supérieure de la trémie, afin de découvrir ce couvercle.

Enfin, la tête de répartition est exposée aux graines qui ont tendance à se coincer dans les différents interstices, notamment entre deux embouts périphériques voisins, et il est difficile de la nettoyer, ce qui est gênant lorsque le produit doit être changé.

Il a été proposé par ailleurs de monter la tête de répartition sur un couvercle articulé recouvrant la trémie.

Dans un agencement de ce genre, décrit par exemple dans le document FR 2 770 081 précité, ladite tête n'est pas en contact avec le produit et les problèmes énoncés plus haut sont éliminés.

Toutefois, la présence de la tête de répartition sur le couvercle alourdit considérablement ce dernier, et sa manoeuvre pour l'ouverture et la fermeture du couvercle est délicate, voire dangereuse. De plus cette solution est relativement complexe sur le plan technique, car il faut assurer le raccordement automatique, de manière étanche à l'air, et avec un centrage parfait, de la colonne tubulaire (fixe) avec un tronçon de tube (mobile) solidaire de la tête de répartition, et donc du couvercle.

Enfin, la trémie et son couvercle ont une capacité donnée, invariable.

Il n'est pas possible d'en modifier le volume, notamment en rajoutant ou en enlevant des rehausses en partie supérieure de la trémie.

De telles rehausses, susceptibles d'être fixées de manière amovible sur la trémie, sont représentées par exemple dans la publication de modèle français N° 99 6783 déposé le 28 octobre 1999 par la demanderesse.

L'invention a pour objectif d'éliminer l'ensemble de ces inconvénients.

A cet effet, et conformément à l'invention, d'une part, la trémie présente, en partie haute, un renfoncement de paroi qui constitue un compartiment pénétrant à l'intérieur de la trémie, mais ouvert au moins sur un côté, et, d'autre part, ladite tête de répartition est montée à l'intérieur de ce compartiment.

Grâce à cette disposition, bien que située à l'aplomb de la colonne de transfert, la tête de répartition n'est pas en contact avec le produit et ne retient donc pas de graines ; elle ne gêne aucunement le remplissage de la trémie.

Cette tête est en permanence accessible par le côté ouvert du compartiment.

La trémie peut être équipée sans difficulté de rehausses ou d'un couvercle car la présence du compartiment ne gêne absolument pas leur installation.

Le couvercle peut du reste consister en une simple bâche souple, car il n'a pas à supporter d'efforts importants.

L'ensemble des moyens de transfert des graines depuis la base de la trémie jusqu'à la tête de répartition peut être de type standard, et s'adapter à des types de trémie différents, notamment en hauteur et en capacité.

La longueur (constante) de la colonne de transfert peut être relativement faible; il suffit pour cela que le compartiment recevant la tête de répartition soit positionné à une hauteur modérée de la paroi de trémie. Ainsi, la longueur du trajet que doivent parcourir les graines depuis le doseur jusqu'au soc semeur et, corrélativement la durée du transfert, est maintenue à une valeur acceptable.

Ceci est intéressant pour qu'il n'y ait pas de décalage trop important (dans le temps) entre le dosage et la mise en terre des graines; à défaut, il se pose un problème en bouts de champ, lié à un manque de semis à l'extrémité amont, et à un excès de semis à l'extrémité aval.

Avec un dispositif tel que celui exposé dans le FR 2 770 081 précité, la longueur de la colonne doit être proportionnelle à la hauteur de la trémie. Elle n'est donc pas standard. De plus, la durée du transfert des graines augmente avec cette hauteur, et le problème susmentionné se pose pour des trémies de hauteur importante.

Par ailleurs, selon un certain nombre d'autres caractéristiques avantageuses et non limitatives de l'invention :
- Ce compartiment a une forme générale aplatie, et possède des faces inférieure et supérieure horizontales, ou légèrement inclinées par rapport à un plan horizontal.
- La tête de répartition consiste en un boîtier plat et discoïde ayant sensiblement la forme d'une assiette renversée, dont la périphérie est pourvue d'une pluralité d'embouts servant au branchement des tubulures souples, et dont l'axe vertical coïncide avec celui de la colonne tubulaire.
- La paroi de fond du compartiment présente, vue de dessus, un contour sensiblement en forme de "U" dont l'ouverture débouche à l'extérieur de la trémie.
- Les dimensions et le positionnement relatif du compartiment et de la tête de répartition sont telles qu'elles permettent de loger convenablement les portions d'extrémité amont des tubulures souples connectées à cette dernière, et qu'elles autorisent le passage de l'ensemble de ces tubulures souples et leur sortie hors du compartiment.
- Les dimensions et le positionnement relatif du compartiment et de la tête de répartition sont tels que cette dernière est entièrement logée à l'intérieur dudit compartiment, aucune - ou pratiquement aucune - partie de la tête de répartition ne faisant saillie au-delà de l'embouchure du compartiment, vers l'extérieur de la trémie.
- La trémie ayant la forme générale d'une pyramide renversée, l'embouchure du compartiment est située dans la paroi arrière de cette trémie.
- Ladite tête de répartition étant pourvue d'un couvercle démontable, le compartiment possède une hauteur suffisante pour autoriser l'enlèvement de ce couvercle.
- Les tubulures souples sont subdivisées en au moins deux faisceaux, dont l'un ressort dudit compartiment par son embouchure, tandis que l'autre en ressort par une autre face de la trémie, via un fourreau de raccordement.
- Le semoir comporte au moins deux têtes de répartition, associées chacune à une colonne de transfert tubulaire s'étendant verticalement à l'intérieur de la trémie et montées chacune dans un compartiment distinct constitué par un renfoncement de la paroi de cette trémie.

D'autres caractéristiques et avantages de l'invention apparaîtront à la lecture de la description suivante d'un mode de réalisation préféré de l'invention. Cette description est faite en référence aux dessins annexés dans lesquels :
- la figure 1 est une vue générale de l'arrière, en perspective et partielle, d'un semoir conforme à l'invention.
- la figure 2 est une vue de face partielle de ce semoir, toujours vu de l'arrière, la partie inférieure de la trémie étant représentée en coupe;
- la figure 3 est une vue de côté partielle du même semoir, la zone du compartiment étant représentée coupée par un plan vertical.
- la figure 4 est une vue de dessus partielle du même semoir, la zone du compartiment étant représentée coupée par un plan horizontal.

Le semoir 1 représenté sur les figures est un semoir à distribution pneumatique des graines.

Il comporte une trémie 2 ayant une partie supérieure 20 à contour rectangulaire, et à parois verticales, et une partie inférieure 21 en forme approximative de pyramide renversée, dont la pointe -dirigée vers le bas- présente une fenêtre 200 qui constitue l'ouverture de sortie des graines (non représentées) contenues dans la trémie 2. Dans l'exemple illustré, la trémie est équipée d'une rehausse 22 du genre correspondant au modèle précité.

A la base de la trémie est monté un appareillage 3 de type connu, apte à assurer son bon fonctionnement.

La trémie et son appareillage sont montés sur un châssis support roulant, non représenté, destiné à être attelé à un tracteur agricole.

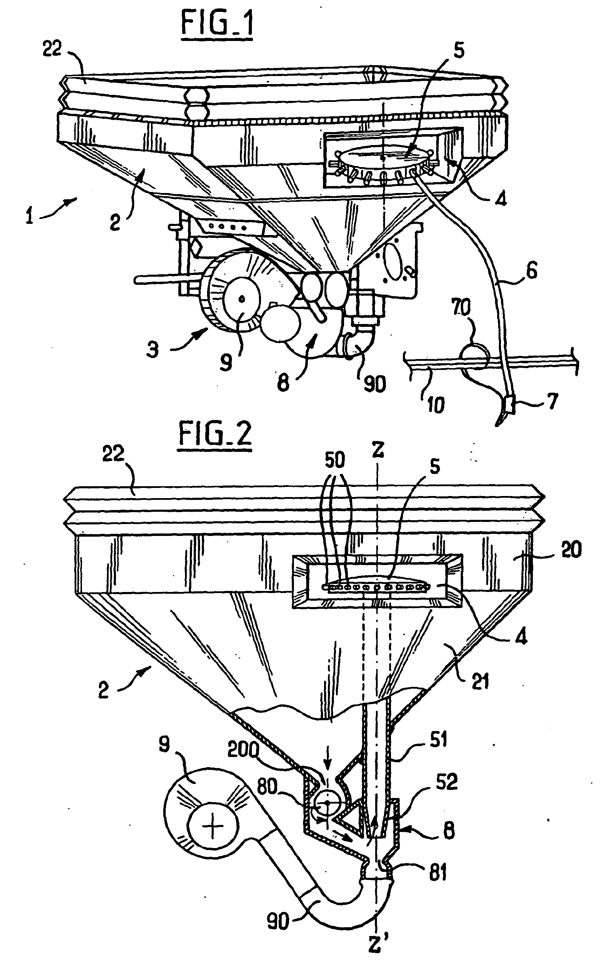

La grande face de la trémie visible sur les figures 1 et 2 est sa face arrière. Le tracteur est situé sur la gauche de la trémie, si on se réfère à la figure 1, et il se déplace de la droite vers la gauche lors du travail de semis.

L'appareillage 3 comprend un dispositif d'extraction et de dosage centralisé 8 apte à extraire des graines hors de la fenêtre de sortie de trémie 200 et à les délivrer, avec un débit déterminé, au moyen d'une roue rotative appropriée 80, à la base d'une colonne de transfert tubulaire cylindrique et verticale 51, au sommet de laquelle est montée une tête de répartition 5. Cette dernière consiste en un boîtier plat et discoïde ayant sensiblement la forme d'une assiette renversée, dont la périphérie est pourvue d'une pluralité d'embouts radiaux 50 servant au branchement de tubulures souples 6, et dont l'axe vertical référencé **Z-Z'** coïncide avec celui de la colonne tubulaire.

De manière bien connue, le semoir est pourvu d'un ensemble de socs semeurs 7, dont l'un seulement est représenté sur la figure 1 afin de ne pas en affecter la lisibilité.

Les socs 7, par exemple au nombre de trente-deux, sont disposés selon deux ou plusieurs rangées, et supportés chacun de façon connue par une traverse 10 par l'intermédiaire d'une tige 70 formant ressort, ou d'un bras articulé sollicité en pression, apte à l'appliquer élastiquement contre le sol avec une certaine liberté de débattement.

Chaque soc 7 est approvisionné en graines à partir de la tête 5 au moyen d'une tubulure souple (flexible) 6, et est adapté pour déposer une ligne de graines régulièrement espacées dans un petit sillon creusé par sa partie antérieure qui fait office de coutre.

L'appareillage 3 comprend également un ventilateur 9 se raccordant par un tuyau coudé 90 à la base du dispositif 8, lequel comporte une manche d'entrée présentant un étranglement 81.

La portion d'extrémité inférieure 52 de la colonne tubulaire 51 est légèrement tronconique, avec un angle au sommet tourné vers le bas.

Les graines délivrées par la roue doseuse 80 descendent au niveau de cet étranglement, comme cela est illustré sur la figure 2 où le trajet des graines est symbolisé par des flèches.

Sous l'action de l'air pulsé par le ventilateur 9, il se produit à l'intérieur du dispositif 8, entre le rétrécissement 81 et la portion tronconique 52 une succion due à un effet de Venturi, qui a pour effet d'aspirer les graines dans la colonne tubulaire 51.

Le flux d'air chargé de graines remonte directement (sans devoir franchir de coude) de bas en haut dans cette colonne et les graines sont ainsi amenées dans la tête de répartition 5, d'où elles sont ensuite projetées de manière homogène dans les tubulures souples 6 afin d'alimenter chaque soc semeur 7.

Comme on le voit sur la figure 2, la colonne 51 traverse la paroi inclinée de la partie basse 21 de la trémie. Elle est fixée à ce niveau, par exemple par un joint de soudure.

Dans la portion supérieure de la trémie 2, la paroi de cette dernière présente un renfoncement qui pénètre partiellement à l'intérieur de la trémie, constituant une sorte de caisson, ou compartiment 4 semi-fermé, ouvert seulement vers l'arrière.

Ce compartiment est décalé latéralement sur un côté par rapport au plan longitudinal médian du semoir. Sa position correspond à celle de la colonne 51.

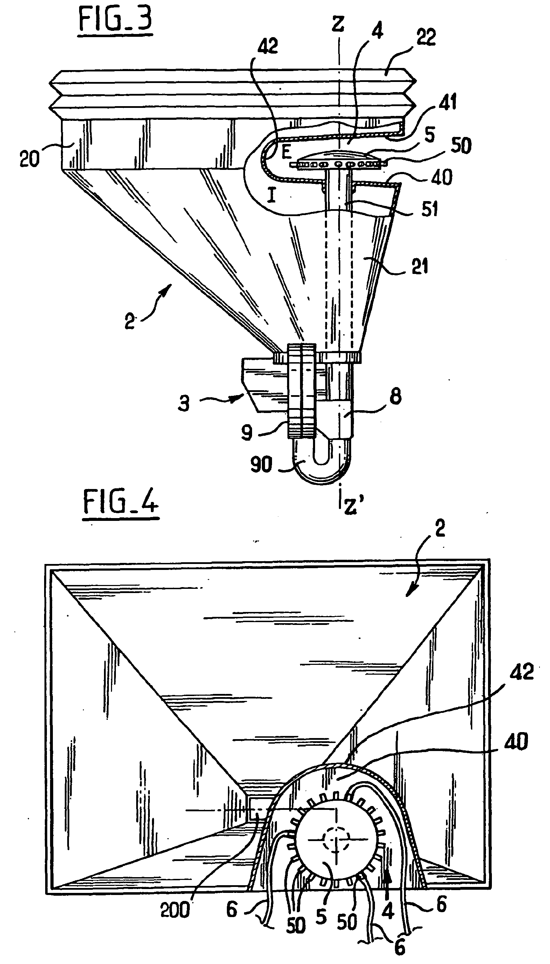

Comme le montrent les figures 3 et 4, ce compartiment a une forme générale aplatie, de faible hauteur.

Dans le mode d'exécution illustré, il est positionné « à cheval » sur les parties de trémie 20 et 21.

Il possède des faces inférieure 40 et supérieure 41 légèrement inclinées par rapport à un plan horizontal, de manière à former un dièdre d'angle au sommet faible, qui converge vers l'intérieur de la trémie.

L'inclinaison de la face 41 favorise l'écoulement des graines dans la trémie au moment de son remplissage.

La paroi de fond 42 du compartiment 4 présente, vue de dessus, un contour sensiblement en forme de "U" dont l'ouverture débouche à l'extérieur de la trémie. Les branches de ce « U » sont légèrement divergentes.

L'espace intérieur à ce compartiment 4, référencé E sur la figure 3 est isolé de l'espace intérieur **I** de la trémie, par les éléments de paroi 40 - 41 - 42, bien qu'il soit géométriquement positionné à l'intérieur de cette trémie.

La partie haute de la colonne 51 traverse la face inférieure 40 pour déboucher à l'intérieur de l'espace **E**.

La colonne 51 est avantageusement fixée à ce niveau à la face 40, par exemple au moyen d'un cordon de soudure.

La tête de répartition 5 est fixée coaxialement au sommet de la colonne 51, avec laquelle elle communique intérieurement.

Son contour circulaire est approximativement tangent au plan fictif correspondant la paroi arrière de la trémie (voir figure 4) de sorte que cette tête est entièrement logée à l'intérieur du compartiment 4.

Les dimensions du compartiment 4 sont sensiblement plus grandes que celles de la tête de répartition 5, et cette dernière est ainsi positionnée dans le compartiment 4 que les tubulures souples 6 connectées à la tête 5 ne sont pas soumises à des courbures excessives, même du côté fermé (vers l'avant).

L'ensemble de ces tubulures souples, dont trois seulement ont été représentées sur la figure 4 afin de ne pas l'alourdir inutilement, sont convenablement recourbées et regroupées de manière à entourer la tête 5 et à ressortir hors du compartiment 4 par son embouchure, dirigée vers l'arrière.

Le fond semi circulaire 42 aide au bon maintien et au guidage des portions recourbées des tubulures avant.

La hauteur de la cavité 4 est également sensiblement supérieure à l'épaisseur de la tête 5 de façon à faciliter l'accès à cette dernière pour des interventions de maintenance ou des travaux de réparation.

Cette hauteur, notamment, est suffisante pour permettre de retirer le couvercle de la tête de répartition.

Cependant, le compartiment est naturellement dimensionné de telle façon que son volume, qui vient en déduction de celui de la trémie pour le calcul du volume utile, ait une valeur faible par rapport à celui de la trémie.

Avantageusement, à des fins essentiellement d'ordre esthétique, l'embouchure du compartiment peut être partiellement fermée par un capot facilement démontable, masquant à la vue la tête de répartition, tout en autorisant le passage des tubulures souples vers le bas.

Plutôt que de déboucher vers l'arrière de la trémie, le compartiment recevant la tête de répartition 5 pourrait bien sûr déboucher sur un autre côté, latéralement ou vers l'avant, voire dans un angle (sur deux côtés).

Dans des semoirs du type de l'invention, il est courant que certains embouts au moins puissent être obturés sélectivement, afin de ne pas alimenter les tubulures correspondantes.

Avantageusement, le fond du compartiment recevant la tête de distribution présente une ou plusieurs ouvertures ainsi positionnées et dimensionnées, que lesdits embouts étant obturés, les graines puissent les traverser et retomber directement, sous l'effet de la gravité, dans la trémie.

Grâce à cet agencement, le débit des graines distribuées par les autres tubulures -dont l'embout est resté ouvert- n'est pas modifié.

Dans certaines configurations de semoir, il peut être intéressant de relier le compartiment à une face de la trémie autre que celle dans laquelle il débouche.

Dans ce cas, cette liaison peut être assurée par un fourreau (manchon tubulaire) situé à l'intérieur de la trémie et qui se raccorde, par une extrémité au compartiment, tandis que son autre extrémité est positionnée et fixée dans une ouverture ménagée dans ladite autre face, pour y déboucher.

Ainsi, les tubulures souples raccordées à la tête de répartition peuvent être divisés en deux faisceaux distincts, à savoir un faisceau principal qui ressort du compartiment par son embouchure, par exemple vers l'arrière de la trémie, et un faisceau secondaire qui passe dans le fourreau et sort de la trémie par une autre face de sa paroi, par exemple dirigée sur un côté.

L'invention peut s'appliquer à toute forme de trémie.

On ne sortirait pas du cadre de l'invention en installant sur une même semoir deux, voire plus de deux, dispositifs tels que revendiqués ci-après, une même trémie pouvant présenter deux renfoncements, ou plus, adaptés pour recevoir chacun une tête de répartition, ce qui peut être intéressant pour des semoirs de grande capacité, assurant un travail sur une largeur étendue.

Enfin, bien qu'une telle disposition soit moins performante sur le plan des performances, et notamment de l'homogénéité de la distribution, on ne sortirait pas non plus du cadre de l'invention en disposant le dispositif d'extraction et de dosage centralisé 8, non pas strictement à la base de la colonne 51, mais dans une position légèrement décalée par rapport à l'axe de cette dernière, le transfert des graines du dispositif 8 à la base de la colonne 51 se faisant alors via une gaine intermédiaire coudée.

## Revendications

1. Semoir à distribution pneumatique des graines, comprenant une trémie de stockage (2) des graines à semer, à la base de laquelle est placé un dispositif d'extraction et de dosage centralisé (8) apte à extraire des graines hors de la trémie (2) et à les délivrer avec un débit déterminé à la base d'une colonne de transfert tubulaire (51) verticale, ou sensiblement verticale, au sommet de laquelle est montée une tête de répartition (5) connectée par un ensemble de tubulures souples (6) à un ensemble de socs semeurs (7), un dispositif de soufflage à effet Venturi (9-81) étant adapté pour faire remonter de bas en haut dans cette colonne tubulaire (51) les graines délivrées par ledit dispositif d'extraction et de dosage (8) et pour les amener à la tête de répartition (5), afin qu'elles soient ensuite projetées dans les tubulures souples (6) pour alimenter les socs semeurs (7), **caractérisé par** le fait, d'une part, que la trémie (2) présente, en partie haute, un renfoncement de paroi qui constitue un compartiment (4) pénétrant à l'intérieur de la trémie, mais ouvert au moins sur un côté, et, d'autre part, que ladite tête de répartition (5) est montée à l'intérieur de ce compartiment (4)

2. Semoir selon la revendication 1, **caractérisé par le fait que** ledit compartiment (4) a une forme générale aplatie, et possède des faces inférieure (40) et supérieure (41) horizontales, ou légèrement inclinées par rapport à un plan horizontal.

3. Semoir selon la revendication 2, **caractérisé par le fait que** ladite tête de répartition (5) consiste en un boîtier plat et discoïde ayant sensiblement la forme d'une assiette renversée, dont la périphérie est pourvue d'une pluralité d'embouts (50) servant au branchement des tubulures souples (6), et dont l'axe vertical coïncide avec celui (**Z -Z'**) de la colonne tubulaire (51).

4. Semoir selon la revendication 3, **caractérisé par le fait que** la paroi de fond (42) du compartiment présente, vue de dessus, un contour sensiblement en forme de "U" dont l'ouverture débouche à l'extérieur de la trémie.

5. Semoir selon l'une des revendications 1 à 4, **caractérisé par le fait que** les dimensions et le positionnement relatif du compartiment (4) et de la tête de répartition (5) sont telles qu'elles permettent de loger convenablement les portions d'extrémité amont des tubulures souples (6) connectées à cette dernière, et qu'elles autorisent le passage de l'ensemble de ces tubulures souples (6) et leur sortie hors du compartiment (4).

6. Semoir selon l'une des revendications 1 à 5, **caractérisé par le fait que** les dimensions et le positionnement relatif du compartiment (4) et de la tête de répartition (5) sont telles que cette dernière est entièrement logée à l'intérieur dudit compartiment (4), aucune - ou pratiquement aucune - partie de la tête de répartition ne faisant saillie au-delà de l'embouchure du compartiment, vers l'extérieur de la trémie.

7. Semoir selon l'une des revendications 1 à 6, **caractérisé par le fait que**, la trémie (2) ayant la forme générale d'une pyramide renversée, l'embouchure du compartiment (4) est située dans la paroi arrière de cette trémie.

8. Semoir selon l'une des revendications 1 à 7, **caractérisé par le fait que** ladite tête de répartition (5) étant pourvue d'un couvercle démontable, ledit compartiment (4) possède une hauteur suffisante pour autoriser l'enlèvement de ce couvercle.

9. Semoir selon l'une des revendications 1 à 8, **caractérisé par le fait que** lesdites tubulures souples (6) sont subdivisées en au moins deux faisceaux, dont l'un ressort dudit compartiment (4) par son embouchure, tandis que l'autre en ressort par une autre face de la trémie, via un fourreau de raccordement.

10. Semoir selon l'une des revendications précédentes, **caractérisé par le fait qu'**il comporte au moins deux têtes de répartition, associées chacune à une colonne de transfert tubulaire s'étendant verticalement à l'intérieur de la trémie et montées chacune dans un compartiment distinct constitué par un renfoncement de la paroi de cette trémie.

## Claims

1. A seeder with pneumatic dispensing of the seeds, comprising a hopper (2) for storing the seeds to be sown, at the base of which is placed a centralized extraction and metering device (8) capable of extracting seeds from out of the hopper (2) and delivering them with a determined delivery rate to the base of a vertical or substantially vertical tubular transfer column (51) at the top of which is mounted a dispensing head (5) connected by a set of flexible tubes (6) to a set of sowing shares (7), a Venturi effect blowing device (9-81) being adapted for moving the seeds delivered by said extraction and metering device (8), upwards from the bottom in this tubular column (51), and for bringing them to the dispensing head (5), so that they are then projected into the flexible tubes (6) in order to feed the sowing shares (7), **characterized by** the fact that the hopper (2) in the top portion has a wall recess which forms a compartment (4) penetrating into the inside of the hopper, but at least open on one side on the one hand, and said dispensing head (5) is mounted inside this compartment (4).

2. The seeder according to claim 2, **characterized by** the fact that said compartment (4) has a general flattened shape, and has horizontal lower (40) and upper (41) faces, or slightly tilted relatively to a horizontal plane.

3. The seeder according to claim 1, **characterized by** the fact that said dispensing head (5) consists in a flat and discoidal casing substantially having the shape of a plate turned upside down, the periphery of which is provided with a plurality of end pieces (50) used for connecting the flexible tubes (6), and the vertical axis of which coincides with that (Z-Z') of the tubular column (51).

4. The seeder according to claim 3, **characterized by** the fact that the bottom wall (42) of the compartment, as seen from above, has a substantially U-shaped contour, the aperture of which opens out on the outside of the hopper.

5. The seeder according to one of claims 1 to 4, **characterized by** the fact that the dimensions and the relative positioning of the compartment (4) and of the dispensing head (5) are such that they allow suitable accommodation of the upstream end portions of the flexible tubes (6) connected to the latter, and they allow the passing of the set of these flexible tubes (6) and their exiting from out of the compartment (4).

6. The seeder according to one of claims 1 to 5, **characterized by** the fact that the dimensions and the relative positioning of the compartment (4) and of the dispensing head (5) are such that the latter is entirely accommodated inside said compartment (4), no - or practically no - portion of the dispensing head protruding beyond the mouth of the compartment, towards the outside of the hopper.

7. The seeder according to one of claims 1 to 6, **characterized by** the fact that, the hopper (2) having the general shape of an upside-down pyramid, the mouth of the compartment (4) is located in the rear wall of this hopper.

8. The seeder according to one of claims 1 to 7, **characterized by** the fact that said dispensing head (5) being provided with a lid which may be disassembled, said compartment (4) has sufficient height for allowing this lid to be removed.

9. The seeder according to one of claims 1 to 8, **characterized by** the fact that said flexible tubes (6) are subdivided into at least two bundles, one of which emerges from said compartment (4) through its mouth, while the other one emerges therefrom through another face of the hopper, via a connecting sheath.

10. The seeder according to any of the preceding claims, **characterized by** the fact that it includes at least two dispensing heads, each associated with a tubular transfer column, extending vertically inside the hopper and each mounted in a distinct compartment formed by a recess of the wall of this hopper.

## Patentansprüche

1. Sämaschine mit pneumatischer Saatkornverteilung, umfassend einen Trichter (2) für die Speicherung der auszusäenden Saatkörner, auf dessen Boden eine zentrale Entnahme- und Dosiervorrichtung (8) angeordnet ist, die dafür geeignet ist, Saatkörner aus dem Trichter (2) zu entnehmen und sie mit einem Durchsatz auszugeben, der auf der Grundlage einer vertikalen, oder im Wesentlichen vertikalen, röhrenförmigen Übergabesäule (51) bestimmt wird, an deren Spitze ein Verteilungskopf (5) angeordnet ist, der über eine Anordnung flexibler Rohrleitungen (6) mit einer Anordnung von Drillscharen (7) verbunden ist, wobei eine Blasvorrichtung mit Venturi-Effekt (9-81) dafür geeignet ist, die durch die Entnahme- und Dosiervorrichtung (8) ausgegebenen Saatkörner in dieser röhrenförmigen Säule (51) von unten nach oben aufsteigen zu lassen und sie dem Verteilungskopf (5) zuzuführen, damit sie anschließend in die flexiblen Rohrleitungen (6) geblasen werden, um die Drillscharen (7) zu versorgen, **dadurch gekennzeichnet**, einerseits, dass der Trichter (2) im oberen Bereich einen Rücksprung der Wand aufweist, der ein Fach (4) bildet, das in das Innere des Trichters eindringt, jedoch auf mindestens einer Seite offen ist, und, andererseits, dass der Verteilungskopf (5) im Innern dieses Fachs (4) angeordnet ist.

2. Sämaschine nach Anspruch 1, **dadurch gekennzeichnet, dass** das Fach (4) eine allgemein abgeflachte Form hat und eine untere Seite (40) und eine obere Seite (41) aufweist, die horizontal sind, oder relativ zu einer horizontalen Ebene geringfügig geneigt sind.

3. Sämaschine nach Anspruch 2, **dadurch gekennzeichnet, dass** der Verteilungskopf (5) aus einem flachen, diskusförmigen Gehäuse besteht, das im Wesentlichen die Form eines umgedrehten Tellers hat, dessen Rand mit einer Vielzahl von Mundstücken (50) versehen ist, die dem Anschluss der flexiblen Rohrleitungen (6) dienen, und dessen vertikale Achse mit derjenigen (Z-Z') der röhrenförmigen Säule (51) zusammenfällt.

4. Sämaschine nach Anspruch 3, **dadurch gekennzeichnet, dass** die Bodenwand (42) des Fachs, von oben gesehen, eine im Wesentlichen U-förmige Kontur aufweist, deren Öffnung an der Außenseite des Trichters mündet.

5. Sämaschine nach einem der Ansprüche 1 bis 4, **dadurch gekennzeichnet, dass** die Abmessungen und die relative Positionierung des Fachs (4) und des Verteilungskopfes (5) dergestalt sind, dass sie es ermöglichen, die vorderen Endbereiche der flexiblen Rohrleitungen (6), die mit letzterem verbunden sind, entsprechend aufzunehmen, und dass sie den Durchtritt der Anordnung dieser flexiblen Rohrleitungen (6) und deren Austritt aus dem Fach (4) heraus gestatten.

6. Sämaschine nach einem der Ansprüche 1 bis 5, **dadurch gekennzeichnet, dass** die Abmessungen und die relative Positionierung des Fachs (4) und des Verteilungskopfes (5) dergestalt sind, dass letzterer vollständig im Innern des Fachs (4) aufgenommen wird, wobei kein - oder praktisch kein - Teil des Verteilungskopfs über die Mündung des Fachs zur Außenseite des Trichters hin übersteht.

7. Sämaschine nach einem der Ansprüche 1 bis 6, **dadurch gekennzeichnet, dass**, wenn der Trichter (2) die allgemeine Form einer umgedrehten Pyramide aufweist, sich die Mündung des Fachs (4) in der hinteren Wand dieses Trichters befindet.

8. Sämaschine nach einem der Ansprüche 1 bis 7, **dadurch gekennzeichnet, dass**, wenn der Verteilungskopf (5) mit einem abnehmbaren Deckel versehen ist, das Fach (4) eine Höhe aufweist, die ausreicht, um das Abheben dieses Deckels zu gestatten.

9. Sämaschine nach einem der Ansprüche 1 bis 8, **dadurch gekennzeichnet, dass** die flexiblen Rohrleitungen (6) in mindestens zwei Bündel unterteilt sind, von denen das eine aus dem Fach (4) über dessen Mündung austritt, während das andere durch eine andere Seite des Trichters über eine Anschlusshülse austritt.

10. Sämaschine nach einem der vorhergehenden Ansprüche, **dadurch gekennzeichnet, dass** sie mindestens zwei Verteilungsköpfe umfasst, die jeweils mit einer röhrenförmigen Übergabesäule verbunden sind, die sich im Innern des Trichters in vertikaler Richtung erstreckt, und die jeweils in einem unterschiedlichen Fach angeordnet sind, das durch einen Rücksprung der Wand dieses Trichters gebildet ist.
